(19)

Europäisches
Patentamt
European
Patent Office
Office européen
des brevets

(11) **EP 4 328 684 A1**

(12) **EUROPEAN PATENT APPLICATION**

(43) Date of publication:
**28.02.2024 Bulletin 2024/09**

(21) Application number: **22191930.1**

(22) Date of filing: **24.08.2022**

(51) International Patent Classification (IPC):
**G05B 19/418** *(2006.01)*     **G05B 17/02** *(2006.01)*
**G05B 13/02** *(2006.01)*

(52) Cooperative Patent Classification (CPC):
**G05B 19/41875; G05B 17/02;** G05B 13/027;
G05B 2219/32077; G05B 2219/32193;
G05B 2219/32194

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
- **Bierweiler, Thomas
  76131 Karlsruhe (DE)**
- **Busch, Julian
  81539 München (DE)**
- **Labisch, Daniel
  76149 Karlsruhe (DE)**
- **Lebacher, Michael
  84513 Töging am Inn (DE)**

(74) Representative: **Siemens Patent Attorneys
Postfach 22 16 34
80506 München (DE)**

(54) **PREDICTING A BATCH QUALITY VALUE BY A MACHINE LEARNING MODEL FOR A DEDICATED BATCH OF MATERIAL IN A PRODUCTION LINE**

(57)     Computer-implemented method for generating a trained ML model predicting a batch quality value for a batch of material, produced in a production entity of a production stage, wherein the batch of material is mixed in a subsequent production entity of at least one further production stage of a production line with other batches of material produced in other production entities of the same production stage, comprising the steps:
- collecting sensor data (S1) measured at each production entity of the production stages and a time stamp providing a data collection time at which the sensor data ($x_i$) was collected,
- collecting a multiplicity of lab samples (S2), each lab sample consisting of a set of products output at the pro-duction entities of a last production stage of the production line, wherein the lab sample provides a quality measure of the batch of products, and a time stamp providing a lab sample time at which the lab sample was collected,
- establishing (S3) a weight matrix comprising weight coefficients of non-zero value for each of the batches of mate-rial which contribute to the lab samples,
- establishing (S4) a ML model which receives the collected sensor data as input and outputs the predicted quality value for each of the batch of material, and
- generating (S5) a trained ML model (Mt) by jointly optimizing predicted batch quality labels of the ML model and the weight matrix with respect to the collected lab samples.

FIG 1

EP 4 328 684 A1

**EP 4 328 684 A1**

**Description**

The present disclosure relates to an assistance apparatus and a computer-implemented method for generating a trained ML model predicting a batch quality value for a dedicated batch of material produced in a dedicated production entity of a production stage, wherein the dedicated batch of material is mixed in a subsequent production entity of at least one further production stage of a production line with other batches of material produced in other production entities of the same production stage.

In process plants materials flow through production units continuously or they are treated batchwise in reactors and undergo certain processing steps, such as chemical reactions, heating, cooling, drying, or other mechanical or chemical treatments. Examples include chemical and pharmaceutical production processes, oil and gas processing, and food and beverage production. Monitoring of processes and data-driven product quality prediction is a central task that enables more complex tasks such as production monitoring and optimization, predictive maintenance of the production line, and identifying, analysing and mitigating anomalous production.

Quality control for production processes is commonly performed at the end of the production where product samples are taken at certain points in time. A central challenge consists of attributing the results of these quality measurements to specific batches of material that were produced prior to the specific sample being taken and were mixed later along the production line. Assigning quality labels to specific batches of material is necessary for being able to treat different production units such as multiple chemical reactors producing material batches in parallel separately for monitoring, optimization, maintenance, etc. In summary, mixing and unknown time delays obscure a direct relationship between lab samples and produced batches.

Therefore, it is the object of the present application to provide an assistance apparatus and method that enables a prediction of end-quality per production stage and not only at the end of the whole production where the results of intermediate production stages are mixed.

This object is solved by the features of the independent claims. The dependent claims contain further developments of the invention.

A first aspect concerns a computer-implemented method for generating a trained ML model predicting a batch quality value for a batch of material produced in a production entity of a production stage, wherein the batch of material is mixed in a subsequent production entity of at least one further production stage of a production line with other batches of material produced in other production entities of the same production stage, comprising the steps,

- collecting sensor data measured at each production entity of the production stages and a time stamp providing a data collection time at which the sensor data was collected,
- collecting at least one lab sample consisting of a set of products output at the batch entities of a last production stage of the production line, wherein the lab sample provides a quality measure of the batch of products, and a time stamp providing a lab sample time at which the lab sample was collected,
- establishing a weight matrix comprising weight coefficients of non-zero value for each of the batches of material which contribute to the lab samples,
- establishing a ML model which receives the collected sensor data as input and outputs the predicted quality value for each of the batch of material, and
- generating a trained ML model by jointly optimizing predicted batch quality labels of the ML model and the weight matrix with respect to the collected lab samples.

The weight matrix provides the information how a certain lab sample is influenced by different produced batches of material. The ML model provides a suitable relationship between the lab samples and the quality of the batch of material produced in a production entity by jointly optimizing the ML model and the weight matrix and allows to conclude on the quality of each production entities in the production line. The method learns optimal mixing coefficients together with the ML model.

In an embodiment of the method, the collected sensor data is provided by a real-valued vector for one specific point in time or a time-series of real-valued vectors.

This enables to use all available sensor data and lab samples by the method to infer the batch quality labels and mixing weights as accurately as possible.

In an embodiment of the method, those batch entities, which contribute to the lap sample, are determined from a temporal relationship between the lab sample time of the lap sample and the data collection time of the sensor data measured at each production entity of the production stages.

This allows to relate potential production entities with the considered lap sample and thus allows to conclude from the lap sample to the quality of the batch of material produced by production entities and in consequence the condition of the production entities as such. In contrast, if lab samples would only be associated with windows of this time series rather than batches of material and production entities respectively, the ML model does not allow for treating

2

different production entities, such as multiple chemical reactors producing batches of material in parallel, separately for tasks such as monitoring, optimization, maintenance, etc.

In an embodiment of the method, the optimization is performed by minimizing a mean square error (MSE) between mixed predicted batch quality labels of the ML model and the collected lab samples.

The mixed predicted batch quality labels are provided by the matrix-vector product between the weight matrix and the predicted batch quality labels. The MSE has the advantage that it penalizes strong deviations, i.e., batch quality labels with low deviations are prefered. Further it is differentiable which allows its usage in different ML approaches, especially in neural networks.

In an embodiment of the method, a regularization loss of the weight matrix (W) is added, while the production entities have fixed batch quality labels.

Introducing the regularization loss of the weight matrix provides a unique solution of the optimization task. In this case the batch quality labels have a fixed value.

In an embodiment of the method, the regularization loss is a L2-regularization which provides uniform weight distributions.

Applying a L2-regularization favors more uniform weight distributions. This embodiment should be applied if it can be assumed that the batches of material contribute uniformly to the lab sample.

In an embodiment of the method, the regularization loss is similarity based, preferably a gradient-regularization, which focusses on batch quality labels most similar to the lab sample.

The gradient-regularization is applied if it is assumed that the batches of material having batch quality labels most similar to the lap sample contribute most to the lap sample.

In an embodiment of the method, the optimization applies at least the same number of lab samples as the number of batches of material existing in the production line, and the weight matrix W is full rank, and the weight coefficients are fixed.

This provides a unique solution of the optimization when it is assumed that the weights in the weighting matrix are fixed.

A second aspect concerns a computer-implemented method for predicting a batch quality value for a batch of material produced in a production entity of a production stage, wherein the batch of material is mixed in a subsequent production entity of at least one further production stage of a production line with other batches of material produced in other production entities of the same production stage, comprising the steps:

- collecting actual sensor data measured at each production entity of the production stages and a time stamp providing a data collection time at which the sensor data was collected,
- inputting the actual sensor data into a trained ML model, which was trained according to claim 1 to 9, and
- outputting predicted batch quality values of the batches of material produced at production entity.

This method provides batch quality values for a batch of material produced in a respective production entity without taking (lab) samples of the set of products output at the batch entities of a last production stage of the production line. The batch quality values provide information which is necessary to treat different production units separately for monitoring, optimization, maintenance, etc.

In an embodiment of the method, the method comprises the step of generating control instructions based on the predicted batch quality values and input into the production line.

This enables to control the production entities of the production line based on the output of the trained ML model processing actual sensor data of the production entities.

A third aspect concerns an assistance apparatus for generating a trained ML model predicting a batch quality value for a batch of material produced in a production entity of a production stage, wherein the batch of material is mixed in a subsequent production entity of at least one further production stage of a production line with other batches of material produced in other production entities of the same production stage, comprising at least one processor, configured to perform the steps:

- collecting sensor data measured at each production entity of the production stages and a time stamp providing a data collection time at which the sensor data was collected,
- collecting a multiplicity of lab samples, each lab sample consisting of a set of products output at the batch entities of a last production stage of the production line, wherein the lab sample provides a quality measure of the batch of products, and a time stamp providing a lab sample time at which the lab sample was collected,
- establishing a weight matrix comprising weight coefficients of non-zero value for each of the batches of mate-rial which contribute to the lab samples,
- establishing a ML model which receives the collected sensor data ($x_i$) as input and outputs the predicted quality value for each of the batch of material, and

- generating a trained ML model by jointly optimizing predicted batch quality labels of the ML model and the weight matrix with respect to the collected lab samples.

The assistance apparatus provides the trained ML model based on historical sensor data and lap sample of the production line.

A fourth aspect concerns a monitoring apparatus for predicting a batch quality value for a batch of material produced in a production entity of a production stage, wherein the batch of material is mixed in a subsequent production entity of at least one further production stage of a production line with other batches of material produced in other production entities of the same production stage, comprising at least one processor, configured to perform the steps

- collecting actual sensor data measured at each production entity of the production stages and a time stamp providing a data collection time at which the sensor data was collected,
- inputting the actual sensor data into a trained ML model, which was trained according to the method described above, and
- outputting predicted batch quality values of the batches of material produced at production entity.

A fifth aspect concerns a computer program product directly loadable into the internal memory of a digital computer, comprising software code portions for performing the steps of the method for generating a trained ML model, as described before, when said product is run on said digital computer.

A sixth aspect concerns a computer program product directly loadable into the internal memory of a digital computer, comprising software code portions for performing the steps of the method for predicting a batch quality value, as described before, when said product is run on said digital computer.

The invention will be explained in more detail by reference to accompanying figures. Similar objects will be marked by the same reference signs.

Figure 1    schematically illustrates an example of a production line with production entities in several production stages.

Figure 2    illustrates an embodiment of the inventive method for generating a trained ML model as a flow chart.

Figure 3    schematically illustrates a determination of the weight coefficients.

Figure 4    illustrates various options for selecting possible batch quality labels during generation of an embodiment of a trained ML model.

Figure 5    illustrates the determination of a batch quality values in an embodiment of the trained ML model.

Figure 6    schematically illustrates an embodiment of the inventive assistance apparatus.

Figure 7    illustrates, as a flow chart, an embodiment of the inventive method for predicting a batch quality value in a production line applying the trained ML model.

Figure 8    schematically illustrates an embodiment of the inventive monitoring apparatus.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method and vice versa.

In process plants materials flow through production units continuously or they are treated batchwise in reactors and undergo certain processing stages, such as chemical reactions, heating, cooling, drying, or other mechanical or chemical treatments. Quality control for such production processes is commonly performed at the end of the production where product samples are taken at certain points in time.

A central challenge consists of attributing the results of these quality measurements to specific batches of material that were produced prior to the specific sample being taken and were mixed later along the production. Assigning quality values/labels, further called batch quality labels, to specific batches of material is necessary for being able to treat different production entities, such as multiple chemical reactors producing batches of material in parallel, separately for monitoring, optimization, maintenance, and further. I.e., there is a strong need to provide a prediction of end-quality per production stage and not only at the end of the whole production line, where the results of intermediate production stages are mixed.

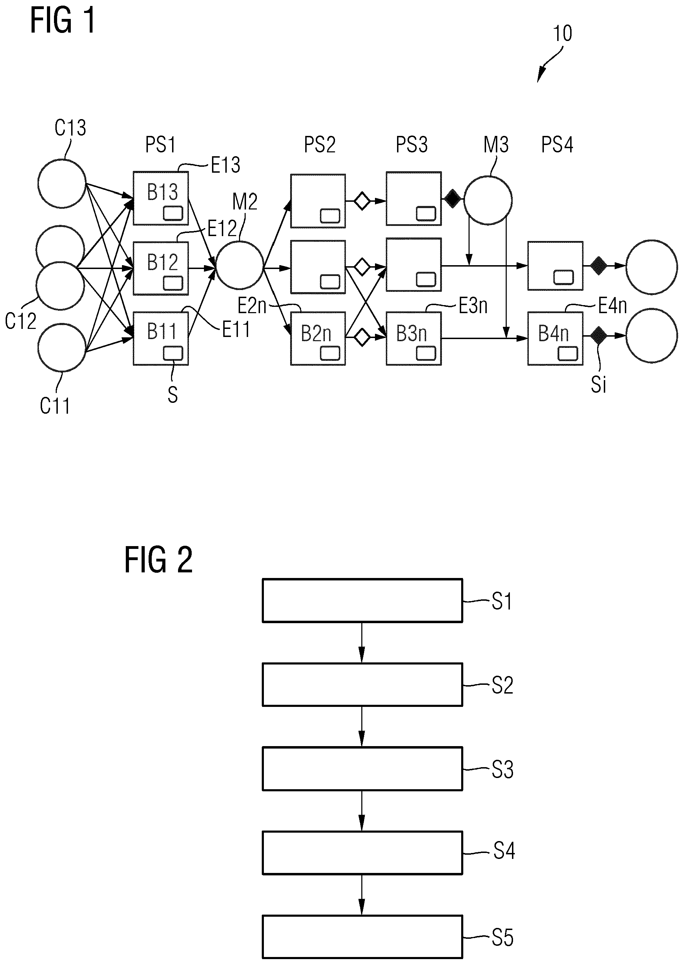

Figure 1 shows an example process executed in production line 10 of a process plant. The batch production line 10 consists of various production stages PS1-PS4, each production stage PS1, PS2, PS3, PS4 comprising at least one but mostly several production entities E11-E14, E2n, E3n, E4n. The main batch process, e.g., batch production stage PS1, runs in parallel but not synchronized in production entities E11, E12, E13. In each of the production entities E11, E12, E13 a mixture of material C11, C12, C13 is process into batches of material B11, B12, B13. Storage tank M1 mixes all produced batches of material B11, B12, B13 produced in production entities E11-E13. Also, production stage PS2 operates in batch mode. Process stages PS3 and PS4 are continuous processes. A silo M3 again leads to a mixture of batches especially by delivering material to production entities E4n. Quality relevant lab samples Sn are taken prior to the silo M3 and after the filtering, indicated by diamonds.

In consequence, mixing and unknown time delays obscure a direct relationship between lab samples Sn and produced batches of material B11, B12, B13 and the production entities E11, E12, E13 respectively.

One possible approach would be to not consider individual production batches, i.e., batches of material B1n, B2n, B3n, B4, and the respective production entities, but rather represent the whole production line 10 as a single time series. Then, lab samples Sn would be associated with windows of this time series rather than batches. While this approach might save data pre-processing effort compared to extracting batch data, it does not allow for treating different production entities, e.g., E11, E12, E13 producing material batches in parallel, separately for tasks such as monitoring, optimization, maintenance, etc. Also, the task of matching the individual time series window labels to the lab samples would remain.

Another approach would be to first estimate fixed mixing weights, e.g., assuming uniform weights or time-based weighting, and then train a regression model and predict batch quality labels. However, the estimated mixing coefficients might not correspond to the actual weights and could potentially be misleading and lead to wrong batch quality labels.

The method disclosed in the following generates a trained machine learning (ML) model, which provides batch quality labels for each of the batches of material B1n, B2n, B3n, B4n from which a quality value/label of the respective production entities E1n, E2n, E3n, E4n can be derived based on sensor data measured by sensors S located at the production entities E11, E12, E13, and at each of the production entities E2n, E3n, E4n for which batch quality values shall be predicted by the trained ML model. The resulting trained ML model can predict batch quality values for the same production entities of the same production line based on actually collected sensor data collected at the production entities.

The main steps of the method are illustrated in Fig. 2 and described in more detail below relating to the production line shown in Fig. 1. To generate a trained ML model which provides a prediction of a batch quality value/label for a batch of material B11, B12, B13, B2n, B3n, B4n produced in production entities E11, E12, E13, E2n, E3n, E4n sensor data are collected which are measured at each production entity of the production stages. Further a time stamp is collected for each of the collected sensor data providing a data collection time at which the sensor data was collected, see step S1.

For production entities E11, E12, E13, E2n, E3n, E4n which do not provide sensor data, there will be no quality value label evaluated. The sensor data represent production conditions and settings of the production entity. The collected sensor data is structured in a real-valued vector for one specific point in time or a time-series of real-valued vectors.

In step S2, a multiplicity of lab samples Sn is collected, each lab sample Sn consisting of a set of products output at the batch entities E4n of a last production stage PS4 of the production line 10, wherein the lab sample Sn provides a quality measure of the batch of products. Further, to each of the collected lab sample Sn a time stamp is collected providing a lab sample time at which the lab sample ($s_i$) was collected.

A weight matrix comprising weight coefficients of non-zero value is established for each of the batches of material B11, B12, B13, B2n, B3n, B4n which contribute to the respective lab samples Sn, see step S3. Those batch entities, which contribute to the lap sample, are determined from a temporal relationship between the lab sample time of the lap sample and the data collection time of the sensor data measured at each production entity of the production stages.

Further a ML model is established, see step S4, which receives the collected sensor data as input and outputs the predicted quality value for each of the batch of material B11, B12, B13, B2n, B3n, B4n. The ML model is a neural network, comprising an encoder structured as a Multilayer perceptron MLP, a convolutional neural net CNN, or a Long short-term memory LSTM.

A trained ML model is generated, see step S5, by jointly optimizing predicted batch quality labels of the ML model and the weight matrix with respect to the collected lab samples. The optimization is performed by minimizing a mean square error between mixed predicted batch quality labels of the ML model and the collected lab samples Sn.

The technical problem is formalized as follows. A set of batches of material bi is given by

$$\{b_i = (x_i, y_i), i = 1, \dots n\},$$

where $x_i$ denotes a feature representation, i.e., measured sensor data representing production conditions of the batch of material. $y_i \in \mathbb{R}$ denotes the true quality of the batch of material that is unknown and needs to be determined. The time stamp providing the data collection time is known, at which production of the batch material, e.g., B11, completed in the production entity, here E11, and it was forwarded in the production line 10 and potentially mixed with other batches of material, e.g., B12, B13. The feature representation, i.e., the collected sensor data optionally in a pre-processed form, can either be a real-valued vector or a time series of real-valued vectors, depending on the available data and contains information on setpoints configured at the production entity and actual sensor measurements taken during production of the batch.

It is assumed that there exists a functional relationship f that allows for predicting the batch quality $y_i$ from the batch feature representations, i.e., the sensor data $x_i$ to a certain degree. Further, lab samples $s_i \in \mathbb{R}$ are taken at certain points in time. We assume that each lab sample $s_i$ is a convex combination of a set of potentially relevant batches of material $b_j$ for that lab sample, i.e.,

$$S_i = \sum_j w_{ji} y_j$$

where

$$w_{ij} \geq 0$$

for all $i,j$ and

$$\sum_j w_{ji} = 1$$

for all $i$.

Given the batch quality label vector y and the lab sample vector s, this results in matrix form as $s = W_y$, where $W \in \mathbb{R}^{n \times m}$ denotes the mixing coefficient of a weight matrix.

We assume weight matrix $W$ to be sparse, i.e., not all batches of material B11, B2i, B3i, B4i, the index $i$ indicating any of the batches of material of production stages PS2, PS3, PS4, potentially related to all lab samples $s_j$. While it is assumed that the sparsity structure of $W$ to be given we assume that the non-zero mixing coefficients are unknown. The non-zero mixing coefficients are, e.g., derived from the temporal difference between the time stamp at which the processing of the batch of material in the production entity completed, i.e., the data collection time and the time stamp at which the lab sample was taken, i.e., the lap sample time.

The sparsity structure of weight matrix W can be represented as a bipartite graph with adjacency matrix

$$A \in \{0,1\}^{n \times m}$$

and

$$W \circ A = W$$

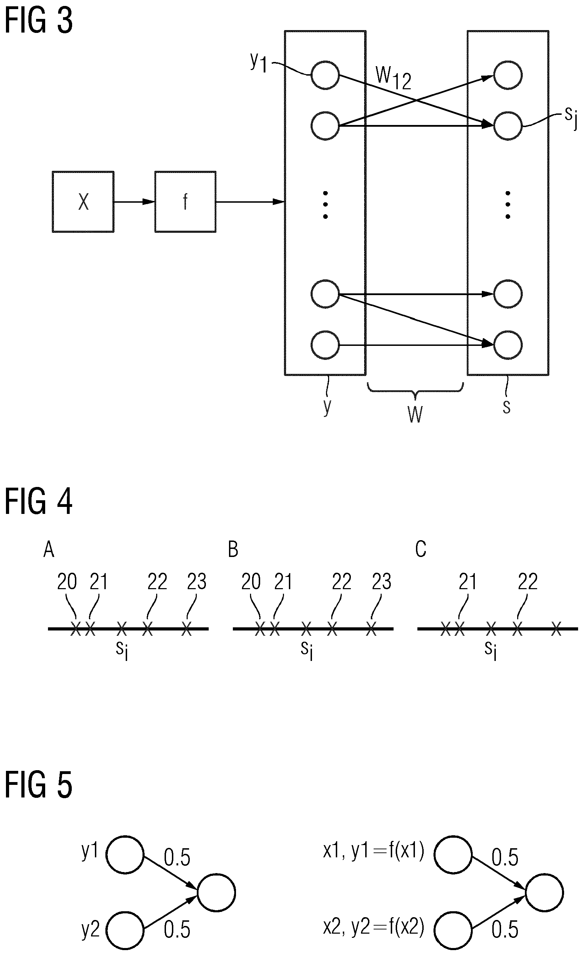

where the left-hand set of nodes correspond to the batches and the right-hand set of nodes corresponds to the lab samples. The problem is illustrated in Fig. 3. The task is to derive the batch quality labels y given the batch features representation X, the adjacency matrix A and the lab samples s. The weight matrix W and the weight coefficients $W_{ij}$ are unknown.

The main idea of our solution is to learn the regression function and the mixing coefficients jointly in an end-to-end fashion. The major advantage of this approach is that we can integrate all available information (batch features, adjacency matrix, lab samples) and thus learn more appropriate mixing coefficients that are better compatible with the batch features compared to estimating a fixed weight matrix beforehand.

We formulate our general solution as the following optimization problem:

$$\underset{\theta, W}{min} \|Wy - s\|_2^2$$

$$s.t. \quad y = f(X; \theta),$$

$$\sum_i w_{ij} = 1 \ \forall j,$$

$$w_{ij} \geq 0 \ \forall_{i,j},$$

$$W \circ A = W$$

The objective function is the same as above, i.e., the mean squared error (MSE) between the mixed predicted batch quality labels and the true lab samples is minimized. However, instead of assuming a fixed given weight matrix W, we optimize W together with parameters $\theta$ of the ML model, especially a regression model f. Constraints are added to ensure that W is stochastic, i.e., that the lab sample is a convex combination of the batches contributing to the lab sample, and a constraint ensuring that W has the same sparsity structure as A where $\circ$ denotes the Hadamard product.

In general, the above optimization problem does not have a unique solution. Given fixed batch quality labels y, the optimization problem w.r.t. W,

$$\underset{W}{min} \|Wy - s\|_2^2$$

$$s.t. \sum_i W_{ij} = 1 \ \forall j,$$

$$w_{ij} \geq 0 \ \forall_{i,j},$$

$$W \circ A = W,$$

does in general not allow for a unique solution. Note that this problem can be solved independently for each lab sample $s_i$, since the batch quality labels y are fixed. For each $s_i$, a unique solution exists if at most two batches of material are connected to $s_i$ and if these batches of material have unique batch quality labels. Otherwise, infinitely many possible convex combinations of the batch quality labels could lead to the same lab sample value.

An illustration is provided in Fig. 4. At the left hand, see part A of Fig. 4, a lab sample $s_i$ is shown with connected batch quality labels. The horizontal axis denoted the quality value. Two batch quality labels 20, 21 are smaller than the lab sample $s_i$ and two batch quality labels 22, 23 are larger than the lab sample $s_i$. The lab sample value can be expressed as infinitely many possible convex combinations of the smaller 20, 21,... and larger batch quality labels 22, 23,.... Ambiguities could be resolved by favouring specific combinations.

Part B of Fig. 4 shows a solution where a most uniform weight distribution is favoured. Here the batch quality labels 20, 21, 22, 23 have a non-zero weight. Part C of Fig.4 shows a combination where only the batch quality labels 21, 22 which are most similar to the lab sample $s_i$ are considered, i.e., only the two batch quality labels closest to the lab sample $s_i$ have a non-zero weight.

These ambiguities are resolved by introducing a regularization loss on W. One possible variant is L2-regularization, which favors more uniform weight distributions, see part B in Fig.4:

$$\min_{w_i} \sum_i \frac{1}{2}\left(w_i^T y - s_i\right)^2 + \frac{\lambda}{2}\|w_i\|_2^2$$

$$s.t. \sum_j W_{ij} = 1,$$

$$w_{ij} \geq 0 \; \forall_j,$$

Note that the feasible set of solutions, i.e., the standard simplex, is closed and convex and that the loss function is strictly convex, i.e., the Hessian $yy^T + \lambda I$ is positive definite. Thus, the solution is unique.

Another possibility is to focus instead on the batch quality labels most similar to the lab sample, see part C of Fig. 4:

$$\min_{w_i} \sum_i \left[\left(s_i - \sum_j w_{ji}f(x_j;\Theta)\right)^2 + \lambda \sum_j \left(stop\_gradient\left(f(x_j;\Theta)\right) - s_i\right)^2 w_{ji}\right]$$

$$s.t. \sum_j w_{ij} = 1,$$

$$w_{ij} \geq 0 \; \forall_j,$$

If a weight is $w_{ij} = 0$, the regularization term for $y_j$ is also zero. If a weight $w_{ij} \geq 0$, the squared distance between $s_i$ and $y_j$ needs to be minimal. Thus, given unique batch quality labels for $s_i$, the solution will uniquely focus on the batch quality labels most similar to the lab sample. Gradients are not propagated from the regularizer through the regression model to avoid potential side effects.

For fixed weights W, the optimal batch quality labels

$$\underset{y}{argmin} \; \|Wy - s\|_2^2$$

are in general also not unique. A unique solution exists if there are at least as many lab samples $s_i$ as batches of material and if the weight matrix W is full rank. These conditions can in general not be satisfied easily, e.g., if lab samples are not taken regularly enough. Further, the regression model for predicting will usually be non-convex. However, our approach of learning to predict the batch quality labels $y_i$ jointly with the mixing coefficients $w_{ji}$ potentially allows for resolving ambiguities based on the given batch features $x_i$ and learned regression function f.

An example is illustrated in Figure 4. Without further knowledge, infinitely many solutions $(y_1, y_2)$ exist, e.g., (100, 100), (200, 0), or (0, 200), see left hand part of Fig. 5, where the contributing batch quality labels $y_1$, $y_2$ contribute each by 50%. With additional knowledge about the batch features $x_1$ and $x_2$ and assuming a relatively simple functional relationship f between x and y, a specific solution becomes more likely than others, see right hand part of Fig. 5. In this example, identical batch features indicate that both batches of material should have the same label. That is, the solution $(y_1, y_2) = (100, 100)$ is more likely than other possible solutions.

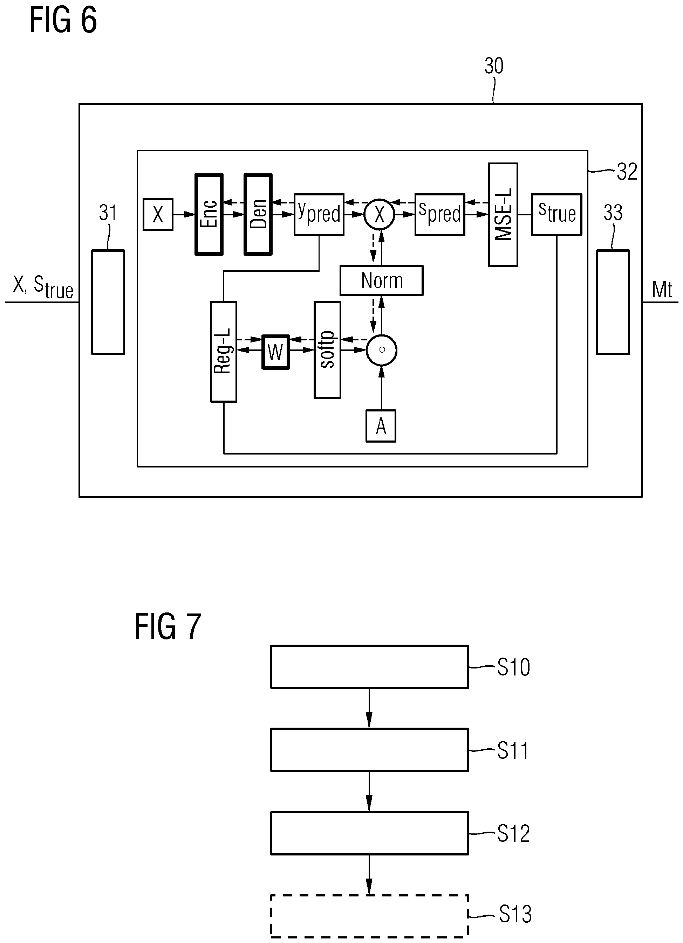

Fig. 6 shows an embodiment of the inventive assistance apparatus. Assistance apparatus 30 consists at least one processor which is configured to perform the steps as described before. Especially the assistance apparatus 30 comprises a data interface unit 31, a training unit 32 and an output interface unit 33. The data interface unit 31 is configured to receive the measured sensor data x and the collected lab samples $S_{true}$. The output interface is configured to output the batch quality labels relating to the input the measured sensor data x and the collected lab samples $S_{true}$ and/or a trained ML model Mt.

The training unit 32 is configured to provide a model architecture to train the ML model Mt. The parameter / components learned are marked with bold lines in training unit 32. These are a feature extraction network Enc and a dense layer Den of the ML model Mt and the weight matrix W. The encoder Enc extracts features from the sensor data. The encoder Enc denotes a generic neural network that could be, depending on the structure of the collected sensor data X, e.g., a Multilayer perceptron MLP, convolutional neural network CNN, or Long short-term memory LSTM module. The dense layer Den predicts the batch quality values depending on the learned features. The constraints on W can be ensured by first applying a softplus function softp to avoid negative weights, multiplying elementwise with adjacency matrix A to ensure the sparsity structure and by finally applying row-wise L1-normalization norm. The model can be trained end-to- end with gradient-based optimization algorithms, such as Adam. A data flow, i.e., a forward pass, is shown training unit 32 in indicated by solid arrows. The gradient flow, i.e., a backward pass, is shown training unit 32 in indicated by dashed arrows.

An embodiment of the method for predicting a batch quality value for a batch of material produced in a production entity of a production stage in a production line is described with flow chart in Fig. 7.

In a first step S10, actual sensor data measured are collected at each production entity of the production stages. A time stamp providing a data collection time at which the sensor data is collected preferably together with the sensor data. These actual sensor data are input into a trained ML model, which was trained as described before, see step S11. Predicted batch quality values of the batches of material produced at a production entity are output based on the collected sensor data and the ML method trained for this production line, see step S12. Optionally, control instructions, e.g., settings of any of the production entities involved in the production or even changing the production entities involved in the production line, are generated based on the predicted batch quality values and input into the batch production, see step S13. Thus, batch quality values are output without taking any lab samples from the series of products actually produced at the end of the production line.

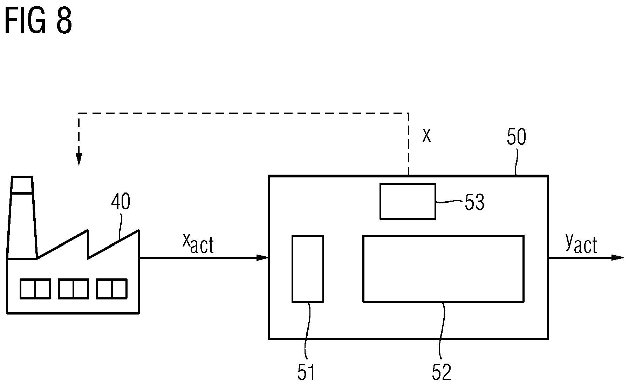

Fig. 8 shows an embodiment of a monitoring apparatus 50 applied in a scenario with an industrial process plant 40. The monitoring apparatus comprises at least one processor configured as a data interface unit 51, a predicting unit 52 and an output interface 53. The data interface unit 51 is configured to receive measured sensor data $x_{act}$, also named feature representations of the batch of material comprising not only information on the material but also on the production entity which is processing the batch of material. The prediction unit 52 is configured to perform the trained ML model generated for the monitored production line in the process plant 40. The output unit interface 53 provides the process plant and/or comprises a user interface, e.g., a graphical user interface, to present the data to a user, e.g., operating personnel.

In batch production, a more straightforward approach which is trying to map a specific lab sample to a specific batch is not feasible due to the complex material flow. The presented generation of a ML method solves the problem of predicting the batch quality under the constraint of a manyto-many relationship between lab samples and batch production. This is achieved by learning the regression function together with the mixing weights in an end-to-end fashion. The ML model considers individual production batches to allow for a localized analysis. It allows for inferring distinctive and highly accurate batch quality labels. The assumptions on the mixing weights are as minimal as possible. This is important since in real-world use cases with complex industrial processes the information about the process itself and the uncertainty related to it is usually very high. All available data, i.e., batch features and lab samples, should be used by the algorithm to infer the batch quality labels and mixing weights must be inferred from the data as accurately as possible. Any method that does not consider this requirement leads to potentially seriously biased results.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

**Claims**

1. Computer-implemented method for generating a trained ML model predicting a batch quality value ($y_i$) for a batch of material (B11, B12, B13, B2n, B3n, B4n), produced in a production entity (Ell, E12, E13, E2n, E3n, E4n) of a production stage (PS1, PS2, PS3, PS4), wherein the batch of material (B11, B12, B13, B2n, B3n, B4n) is mixed in a subsequent production entity (E2n, E3n, E4n) of at least one further production stage (PS2, PS3, PS4) of a production line (10) with other batches of material (B12, B13) produced in other production entities (E12, E13) of the same production stage (PS1), comprising the steps:

   - collecting sensor data (S1) measured at each production entity (Ell, E12, E13, E2n, E3n, E4n) of the production stages (PS1, PS2, PS3, PS4) and a time stamp providing a data collection time at which the sensor data ($x_i$) was collected,
   - collecting a multiplicity of lab samples (S2), each lab sample ($s_i$) consisting of a set of products output at the production entities (E4n) of a last production stage (PS4) of the production line (10), wherein the lab sample provides a quality measure of the batch of products, and a time stamp providing a lab sample time at which the

lab sample ($s_i$) was collected,
- establishing (S3) a weight matrix (W) comprising weight coefficients of non-zero value for each of the batches of material which contribute to the lab samples ($s_i$),
- establishing (S4) a ML model which receives the collected sensor data ($x_i$) as input and outputs ($y_i$) the predicted quality value for each of the batch of material (B11, B12, B13, B2n, B3n, B4n), and
- generating (S5) a trained ML model (Mt) by jointly optimizing predicted batch quality labels ($y_i$) of the ML model and the weight matrix (W) with respect to the collected lab samples ($s_i$).

2. Method according to claim 1, wherein the collected sensor data ($x_i$) is provided by a real-valued vector for one specific point in time or a time-series of real-valued vectors.

3. Method according to any of the preceding claims, wherein those production entities, which contribute to the lap sample ($s_i$), are determined from a temporal relationship between the lab sample time of the lap sample and the data collection time of the sensor data ($x_i$) measured at each production entity of the production stages.

4. Method according to any of the preceding claims, wherein the optimization is performed by minimizing a mean square error between mixed predicted batch quality labels of the ML model and the collected lab samples ($s_i$).

5. Method according to claim 4, wherein adding a regularization loss of the weight matrix (W), while the production entities (Ell, E12, E13, E2n, E3n, E4n) have fixed batch quality labels for the lab sample ($s_i$).

6. Method according to claim 5, wherein the regularization loss is a L2-regularization which provides uniform weight distributions.

7. Method according to claim 5, wherein the regularization loss is similarity based, preferably a gradient-regularization, which focusses on batch quality labels ($y_i$) most similar to the lab sample ($s_i$).

8. Method according to claim 4, wherein the optimization applies at least the same number of lab samples ($s_i$) as the number of batches of material exist in the production line (10), and the weight matrix W is full rank, and the weight coefficients are fixed.

9. Method according to any of the preceding claims, wherein the ML model is a neural network, comprising an encoder structured as a Multilayer perceptron MLP, convolutional neural network CNN or a Long short-term memory LSTM.

10. Computer-implemented method for predicting a batch quality value ($y_i$) for a batch of material (Ell, E12, E13, E2n, E3n, E4n) produced in a production entity (Ell, E12, E13, E2n, E3n, E4n) of a production stage (PS1, PS2, PS3, PS4), wherein the batch of material (B1) is mixed in a subsequent production entity (E2n, E3n, E4n) of at least one further production stage (BS2, BS3, BS4) of a production line (10) with other batches of material (B12, B13) produced in other production entities (E12, E13) of the same production stage (PS1), comprising the steps:

   - collecting (S10) actual sensor data ($x_{act}$) measured at each production entity (Ell, E12, E13, E2n, E3n, E4n) of the production stages (PS1, PS2, PS3, PS4) and a time stamp providing a data collection time at which the sensor data ($x_{act}$) was collected,
   - inputting (S11) the actual sensor data ($x_{act}$) into a trained ML model (Mt), which was trained according to claim 1 to 9, and
   - outputting (S12) predicted batch quality values ($y_i$) of the batches of material (B11, B12, B13, B2n, B3n, B4n) produced at batch production entity (Ell, E12, E13, E2n, E3n, E4n).

11. Computer-implemented method according to claim 10, comprising:

   - generating (S13) control instructions based on the predicted batch quality values ($y_i$) and input into the production line (10).

12. Assistance apparatus for generating a trained ML model predicting a batch quality value ($y_i$) for a batch of material (B11, B12, B13, B2n, B3n, B4n) produced in a production entity (Ell, E12, E13, E2n, E3n, E4n) of a production stage (PS1, PS2, PS3, PS4), wherein the batch of material (B11, B12, B13, B2n, B3n, B4n) is mixed in a subsequent production entity (E2n, E3n, E4n) of at least one further production stage (PS2, PS3, PS4) of a production line (10) with other batches of material (B12, B13) produced in other production entities (E12, E13) of the same production stage (PS1), comprising at least one processor, configured to perform the steps:

- collecting sensor data ($x_i$) measured at each batch production entity (Ell, E12, E13, E2n, E3n, E4n) of the production stages (PS1, PS2, PS3, PS4) and a time stamp providing a data collection time at which the sensor data was collected,
- collecting a multiplicity of lab samples ($s_i$), each lab sample ($s_i$) consisting of a set of products output at the production entities (E4n) of a last production stage (PS4) of the production line (10), wherein the lab sample ($s_i$) provides a quality measure of the batch of products, and a time stamp providing a lab sample time at which the lab sample ($s_i$) was collected,
- establishing a weight matrix (W) comprising weight coefficients of non-zero value for each of the batches of material which contribute to the lab samples ($s_i$),
- establishing a ML model which receives the collected sensor data (xi) as input and outputs ($y_i$) the predicted quality value for each of the batch of material (B11, B12, B13, B2n, B3n, B4n), and
- generating a trained ML model (Mt) by jointly optimizing predicted batch quality labels ($y_i$) of the ML model and the weight matrix with respect to the collected lab samples ($s_i$).

13. Monitoring apparatus for predicting a batch quality value ($y_i$) for a batch of material (B11, B12, B13, B2n, B3n, B4n) produced in a production entity (Ell, E12, E13, E2n, E3n, E4n) of a production stage (PS1, PS2, PS3, PS4), wherein the batch of material (B1) is mixed in a subsequent production entity (E2n, E3n, E4n) of at least one further production stage(BS2, BS3, BS4) of a production line (10) with other batches of material (B12, B13) produced in other production entities (E12, E13) of the same production stage (PS1), comprising at least one processor, configured to perform the steps:

- collecting actual sensor data ($x_{act}$) measured at each production entity (Ell, E12, E13, E2n, E3n, E4n) of the production stages (PS1, PS2, PS3, PS4) and a time stamp providing a data collection time at which the sensor data was collected,
- inputting the actual sensor data ($x_{act}$) into a trained ML model (Mt), which was trained according to claim 1 to 9, and
- outputting predicted batch quality values ($y_i$) of the batches of material (B11, B12, B13, B2n, B3n, B4n) produced at production entity (Ell, E12, E13, E2n, E3n, E4n).

14. A computer program product directly loadable into the internal memory of a digital computer, comprising software code portions for performing the steps of claims 1-9 when said product is run on said digital computer.

15. A computer program product directly loadable into the internal memory of a digital computer, comprising software code portions for performing the steps of claims 10 and 11 when said product is run on said digital computer.

FIG 1

10

C13

PS1
E13
B13

C12

B12
E12
M2

B11
E11
S

PS2
M3
PS3
B2n
B3n
E3n

PS4
B4n
E4n
E2n
Si

FIG 2

S1

S2

S3

S4

S5

# FIG 3

# FIG 4

# FIG 5

# FIG 6

# FIG 7

FIG 8

**EP 4 328 684 A1**

Europäisches
Patentamt

European
Patent Office

Office européen
des brevets

# EUROPEAN SEARCH REPORT

Application Number

EP 22 19 1930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/264332 A1 (PINGALI ASHWIN K [US] ET AL) 26 August 2021 (2021-08-26) * abstract; claims 1,2,12-16; figures 1A,2B,3,4,7a,8,12 * * paragraphs [0010], [0037], [0041] * * paragraph [0099] - paragraph [0105] * * paragraph [0116] * * paragraph [0169] - paragraph [0182] * * paragraphs [0210], [0211] * * paragraph [0237] - paragraph [0245] * * paragraph [0249] - paragraph [0252] * * paragraph [0282] * | 1-15 | INV. G05B19/418 G05B17/02 G05B13/02 |
| A | WO 2022/058412 A1 (BASF SE [DE]) 24 March 2022 (2022-03-24) * abstract; claims 1-14; figures 1-8 * * page 25, line 11 - page 26, line 30 * * page 33, line 30 - page 34, line 4 * * page 44, line 4 - line 37 * | 1-15 | |
| A | US 2019/332101 A1 (CASTILLO CASTILLO PEDRO ALEJANDRO [US] ET AL) 31 October 2019 (2019-10-31) * abstract; claims 1-5,19; figures 1A-1D,1G,2A * * paragraphs [0003], [0008], [0012], [0027], [0028] * * paragraphs [0062], [0074], [0076] * * paragraph [0129] - paragraph [0180] * * paragraph [0253] - paragraph [0276] * | 1-15 | **TECHNICAL FIELDS SEARCHED (IPC)** G05B |
| A | WO 2022/136144 A1 (BASF SE [DE]) 30 June 2022 (2022-06-30) * abstract; claims 1-7; figures 1-8 * * page 1, line 14 - line 23 * * page 6, line 12 - line 27 * * page 12, line 14 - line 32 * * page 20, line 13 - page 22, line 4 * * page 30, line 8 - page 31, line 4 * | 1-15 | |

The present search report has been drawn up for all claims

| Place of search | Date of completion of the search | Examiner |
|---|---|---|
| Munich | 24 January 2023 | Ohanovici, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 1930

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2023

| Patent document cited in search report | | | Publication date | Patent family member(s) | | | Publication date |
|---|---|---|---|---|---|---|---|
| US 2021264332 | A1 | | 26-08-2021 | NONE | | | |
| WO 2022058412 | A1 | | 24-03-2022 | TW | 202213009 | A | 01-04-2022 |
| | | | | WO | 2022058412 | A1 | 24-03-2022 |
| US 2019332101 | A1 | | 31-10-2019 | EP | 3788446 | A1 | 10-03-2021 |
| | | | | JP | 7162075 | B2 | 27-10-2022 |
| | | | | JP | 2021522601 | A | 30-08-2021 |
| | | | | US | 2019332101 | A1 | 31-10-2019 |
| | | | | WO | 2019212653 | A1 | 07-11-2019 |
| WO 2022136144 | A1 | | 30-06-2022 | NONE | | | |

EPO FORM P0459

For more details about this annex : see Official Journal of the European Patent Office, No. 12/82